(19) Europäisches Patentamt
European Patent Office
Office européen des brevets

(11) Publication number: 0 213 412 B1

(12) # EUROPEAN PATENT SPECIFICATION

(45) Date of publication of patent specification: 10.01.90

(51) Int. Cl.$^5$: C 08 F 220/24, G 02 B 1/04

(21) Application number: 86110639.1

(22) Date of filing: 01.08.86

(54) **Contact lenses.**

(30) Priority: 02.08.85 JP 171586/85

(43) Date of publication of application:
11.03.87 Bulletin 87/11

(45) Publication of the grant of the patent:
10.01.90 Bulletin 90/02

(84) Designated Contracting States:
DE FR GB IT

(56) References cited:
EP-A-0 121 918
EP-A-0 162 550
US-A-4 130 706

(73) Proprietor: KURARAY CO., LTD.
1621 Sakazu
Kurashiki-City Okayama Prefecture 710 (JP)

(72) Inventor: Yamamoto, Fumio
2-6-204, Ryodo-cho
Nishinomiya city Hyogo Prefecture (JP)
Inventor: Suzuki, Takayoshi
1621, Sakazu
Kurashiki city Okayama Prefecture (JP)
Inventor: Ikari, Masahiro
359-38, Yoshioka
Kurashiki city Okayama Prefecture (JP)
Inventor: Saito, Susumu
36-5, Toba
Kurashiki city Okayama Prefecture (JP)
Inventor: Ohmori, Akira
16-22, 3-chome, Yamatedai
Ibaraki city Osaka Prefecture (JP)
Inventor: Yasuhara, Takashi
21-21, 2-chome, Hitotsuya
Settsu city Osaka Prefecture (JP)

(74) Representative: Vossius & Partner
Siebertstrasse 4 P.O. Box 86 07 67
D-8000 München 86 (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 213 412 B1

Courier Press, Leamington Spa, England.

## Description

The present invention relates to contact lenses. More particularly, it pertains to contact lenses made of fluorine containing copolymers with fluorinated acrylic or methacrylic esters having hydroxyl groups as their components. Said lenses have excellent oxygen permeability, wettability, hardness and transparency as well as contamination resistance.

Contact lenses made of 2-hydroxyethyl methacrylate or vinyl pyrrolidone as their main component (which contains water) and those made of methyl methacrylate (MMA) or siloxanyl alkyl methacrylate as their main component (which does not contain water) are known.

All the aforementioned water containing lenses are liable to contamination by bacteria, proteins and lipids and for their removal frequent boiling or the use of chemical solutions are indispensable. Such treatment also involves the risk of deterioration of the contact lens material or of injury to the eyes caused by residual chemicals.

Conventional contact lenses having MMA as their main component (which contains no water) have the grave disadvantage of low oxygen permeability and their continuous use is objectionable on account of corneal physiology. Conventional lenses having siloxanyl alkyl methacrylate as their main component excel those having MMA as their main component in oxygen permeability, but are inferior in hardness and wettability. Moreover they have the disadvantage of being liable to contamination by lipids.

Recently, attempts have been made to solve the abovementioned problems by using fluorine-containing-copolymers of acrylic or methacrylic esters as materials for contact lenses. For example, in Japanese Patent Publication No. 46614/1976 contact lenses have been disclosed made of copolymers of particular perfluoroalkyl alkylmethacrylates and/or telomer alcohol methacrylates with MMA. Contact lenses made of copolymers of particular perfluoroalkyl alkylmethacrylates with monomers such as hydroxyethyl methacryate, etc. which contain wettable polar groups are known from Japanese Patent Application Laid-Open No. 29660/1979. Contact lenses made of copolymers of a polyfluoroalkyl methacrylate of a particular structure with methacrylic esters are known from Japanese Patent Application Laid-Open No. 118408/1981. Contact lenses made of copolymers of fluorinated (meth)acrylic esters with (meth)acrylic esters are known from Japanese Patent Application Laid-Open No. 51705/1982 and contact lenses made of copolymers with organosilanes or organosiloxanes which contain particular groups and compounds containing fluoroalkyl groups as their main components are known from Japanese Patent Application Laid-Open No. 28127/1984.

In the aforementioned copolymers with acrylic or methacrylic esters containing fluorine atoms as their main components, when the amount of fluorine atoms is increased, their oxygen permeability is improved, but their water repellency, which has a deleterious effect on contact lenses, increases and their hardness decreases. When water repellency is high, the lens repels eye liquid, so that it cannot play its role, and causes discomfort to the wearer. In addition, when the hardness decreases, machinability becomes more difficult, which results in a drop in the yield of products in manufacturing lenses, and makes lenses susceptible to damage. In order to impart wettability to contact lenses, it was attempted to copolymerize monomers containing hydrophilic hydroxyl groups with said acrylic or methacrylic esters. Because of the compatibility of said acrylic or methacrylic esters with monomers having groups of low hydrophilicity, the copolymers thus obtained were inferior in transparency to those which had acrylic or methacrylic esters as their main components.

As described above, no contact lenses are presently known which do not only have excellent oxygen permeability and wettability, but also have all the other characteristics required of acceptable contact lenses including contamination resistance, high hardness and transparency.

An object of this invention is to provide contact lenses which not only have high oxygen permeability, but also excellent wettability, hardness and transparency, thus not causing discomfort whilst being worn.

Another object of this invention is to provide contact lenses which can be easily machined, and moreover, have high hardness.

Still another object of this invention is to provide contact lenses which show good contamination resistance such that they do not require frequent cleaning.

Thus this invention relates to contact lenses made of copolymers which are substantially composed of 40—95 parts by weight of a structural unit represented by formula (1):

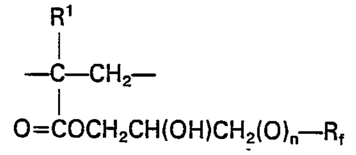

(1)

(where $R^1$ stands for a hydrogen atom or a methyl group; $R_f$ is a polyfluoroalkyl group having 1—15 carbon atoms; and n is either 0 or 1) and 60—5 parts by weight of at least one member selected from a group of structural units represented by formulae 2, 3 and 4:

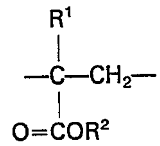

(2)

(where $R^1$ has the above meaning and $R^2$ is an alkyl group having 1—20 carbon atoms or a polyfluoroalkyl group having 1—15 carbon atoms),

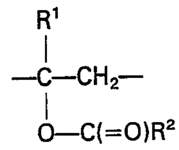

(3)

(where $R^1$ and $R^2$ have the above meaning),

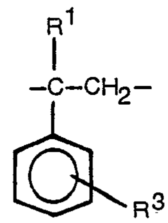

(4)

(where $R^1$ has the above meaning and $R^3$ is a hydrogen atom, an alkyl group having 1—5 carbon atoms or a halogen atom).

The copolymers to be used for the purposes of the present invention have all the aforementioned characteristics required of contact lenses.

According to this invention, the polyfluoroalkyl group denotes an alkyl group either partly or fully substituted by fluorine atoms; normally, 2—31 fluorine atoms are contained in such a group. Said polyfluoroalkyl group should preferably contain 5—10 carbon atoms and 10—20 fluorine atoms.

The copolymers to be used for the purposes of this invention may be obtained by copolymerizing 40—95 parts by weight of a monomer represented by formula:

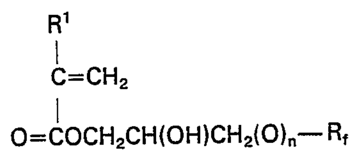

(1′)

(where $R^1$, $R_f$ and n have the above meaning) with 60—5 parts by weight of at least one member selected from a group of monomers consisting of a monomer represented by formula:

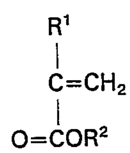

(2′)

(where $R^1$ and $R^2$ have the above meaning), another monomer represented by formula:

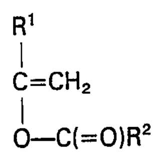

(3′)

(where $R^1$ and $R^2$ have the above meaning) and still another monomer represented by formula:

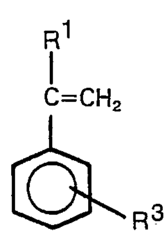

(4′)

(where $R^1$ and $R^3$ have the above meaning).

Typical examples of the monomers of (1′) are:

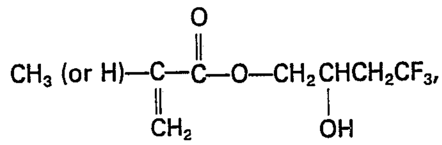

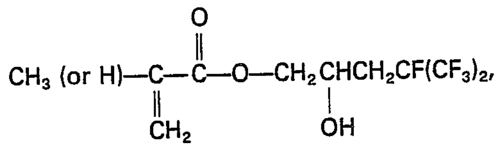

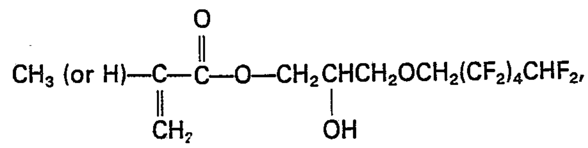

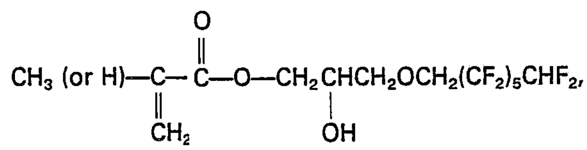

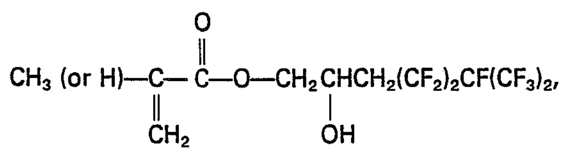

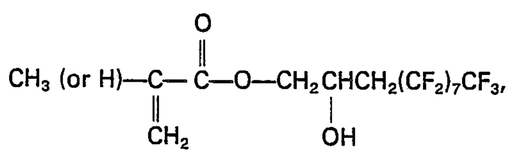

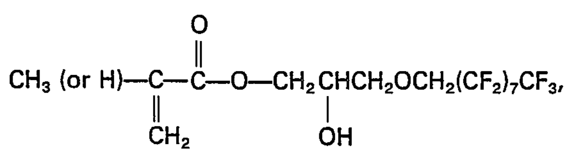

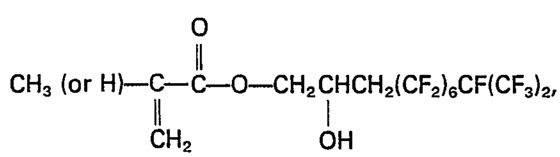

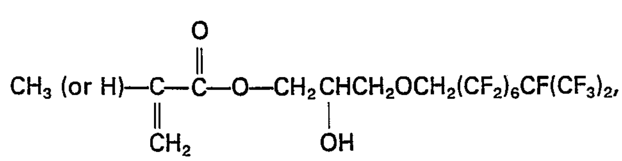

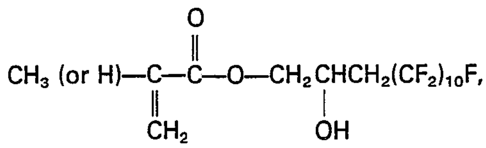

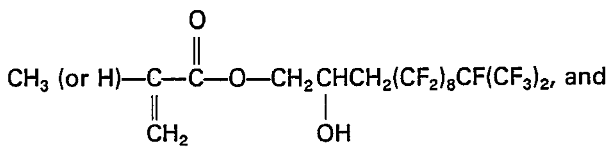

and

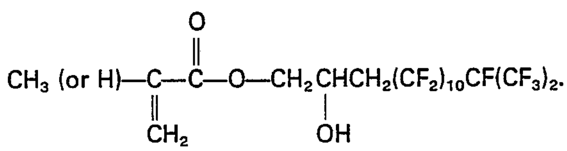

These monomers can be readily synthesized from corresponding epoxides and acrylic or methacrylic acid in a conventional manner.

Typical examples of the monomers of (2′) are: methyl (meth)acrylate, isopropyl (meth)acrylate, n-butyl (meth)acrylate, isobutyl (meth)acrylate, tert-butyl (meth)acrylate, cyclohexyl (meth)acrylate, 2-ethyl hexyl (meth)acrylate, tridecyl (meth)acrylate, stearyl (meth)acrylate,

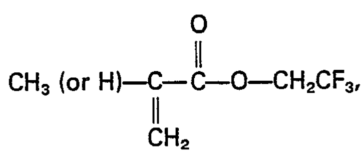

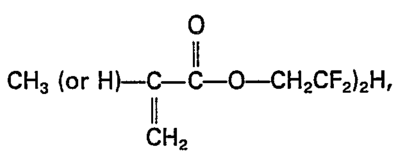

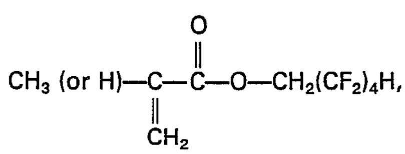

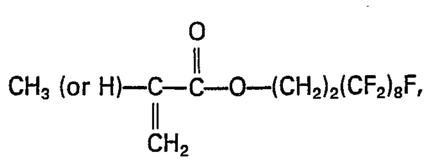

and

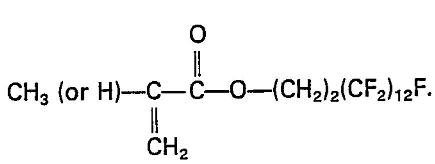

Typical examples of the monomers of (3′) are: vinyl acetate, vinyl butylate, vinyl caproate, vinyl caprylate, vinyl caprate, vinyl laurate, vinyl myristate, vinyl palmitate and vinyl stearate.

Typical examples of the monomers of (4′) are: styrene, para-methyl styrene, para-tert-butyl styrene and para-chlorostyrene.

According to this invention, two or more members of each group of monomers covered by the aforementioned formulae may be used together.

When the proportion of the monomers represented by the formula (1') is 60—90% by weight, copolymers with adequate oxygen permeability and hardness can be obtained. If the number of carbon atoms and that of fluorine atoms in the polyfluoroalkyl group contained in the monomers represented by the formula (1') are 5—10 and 10—20, respectively, when used within the range above-mentioned, then methyl, isopropyl, n-butyl, isobutyl, t-butyl and cyclohexyl esters of methacrylic acid are the preferred monomers to be copolymerized with these monomers in view of workability and configurational stability of the copolymers and the contact lenses.

In order to achieve excellent workability and configurational stability at elevated temperatures in the lenses of this invention, apart from the aforementioned monomers, monomers having two or more groups which permit further crosslinking of the copolymers produced, for example, ethylenically unsaturated groups, may be used as comonomers. Up to 20 parts by weight of any of these comonomers may normally be used based on 100 parts by weight of the monomers represented by (1') and at least one member selected from a group of monomers consisting of those represented by (2') to (4'). Typical examples of these comonomers are: ethylene glycol dimethacrylate, diethylene glycol dimethacrylate, trimethylolpropane trimethacrylate, allyl methacrylate, divinylbenzene and pentaerythritol tetramethacrylate. In practice trimethylol propane trimethacrylate or ethylene glycol dimethacrylate are preferred.

Although the copolymers to be used for the purposes of this invention already have high wettability, despite their large content of fluorine atoms, this property may be further improved by adding up to 15 parts by weight of hydrophilic monomers based on 100 parts by weight of all monomers. Too large an amount of such monomers will increase the water content of these copolymers and thus the lenses, making them undesirably susceptible to bacterial infection. Typical examples of hydrophilic monomers are: ethyleneglycol mono(meth)acrylate, diethyleneglycol mono(meth)acrylate, n-vinyl pyrrolidone, dimethyl acryl amide, methacrylic acid and acrylic acid.

Further, according to this invention, there is no need to form copolymers by adding hydrophobic monomers other than those of formulae (2') to (4'). Nevertheless their use in amounts in which they do not interfere with the realization of the characteristics of the lenses in this invention is permissible. The use of siloxanyl alkyl (meth)acrylates with less than 16 Si atoms is undesirable. They cause opaque copolymers of reduced hardness, susceptibility to contamination and lowered wettability.

The copolymers to be used for the purposes of this invention may be prepared by any conventional methods for polymerizing acrylates or methacrylates, for example, bulk polymerization or solution polymerization. Bulk polymerization is preferred providing transparent copolymers. Peroxides or azo compounds may be used as polymerization initiators. Typical examples are: benzoyl peroxide, lauroyl peroxide, di-isopropyl peroxydicarbonate, di-sec-butyl peroxydicarbonate, azobisisobutyronitrile, azobisdimethyl valeronitril and azobisdimethylisobutylate. The polymerization initiators should preferably decompose at low temperatures to yield free radicals in view of the operation of polymerization. The amount of the polymerization initiator to be used should normally be 0.01—1% by weight, preferably, 0.05—0.5% by weight, based on all monomers. When preparing the copolymers by bulk polymerization, a mixture of the monomers and the polymerization initiator is poured into a mould in the shape of a plate, bar or column, etc., which is, for instance, made of metal, glass or plastic. The reaction is performed by heating in stages, for example, at 30—120°C for approx. 24—50 hrs. The heating method is not critical. The use of a container in the shape of the contact lens in the bulk polymerization will facilitate the processing operation.

The copolymers obtained by the aforementioned operation may be machined in a conventional manner into contact lenses e.g. by cutting and polishing.

Some preferred embodiments of this invention are now described, but they do not bind the scope of this invention. In the description of these embodiments, "parts" signifies parts by weight. Measurements of respective physical properties were taken using the following measuring instruments:

Oxygen permeability coefficient: Oxygen gas permeater manufactured by Rikaseiki Kogyo Co., Ltd.

Vickers hardness: Microhardness tester (type MVK—F) manufactured by Akashi Seisakusho Co., Ltd.

Contact angle: Goniometer type contact-anglemeter (type G—I) manufactured by Erma Optical Works, Ltd.

Example 1

(when monomers having two or more ethylenically unsaturated groups are contained in the copolymers)

Seventy parts of a monomer (19FM—OH) represented by a formula

$$CH_2{=}C(CH_3)COOCH_2CH(OH)CH_2(CF_2)_6CF(CH_3)_2,$$

23 parts of methyl methacrylate, 7 parts of trimethylolpropane trimethacrylate and 0.1 part of 2,2'-azobis-(2,4-dimethyl valeronitrile) were uniformly mixed. The mixture was then poured into a test tube made of polypropylene and deaerated under reduced pressure. Said test tube was hermetically sealed, put into a water bath of a constant temperature and heated for 20 hrs at 40°C, for 10 hrs at 50°C and for 5 hrs at 70°C and finally heated for 2 hrs in a hot air drier at 90°C, thereby causing copolymerization of the monomers. Thereafter, the solid copolymer thus obtained were taken out of the test tube, heated at 120°C for 1 hr and then allowed to cool. A colourless and transparent bar-shaped copolymer was obtained.

Examples 2—7 and Comparison Examples 1—2

Copolymers were prepared by a procedure similar to that of Example 1, but the monomers used and their proportions were altered to those shown in Table 1.

Examples 8—10

Copolymers were prepared by a procedure similar to that of Example 1, but the monomers used and their proportions were altered to those shown in Table 2.

Examples 11—21
(when various monomers (2')—(4') above-mentioned were used)

Copolymers were prepared by a procedure similar to that of Example 1, but the monomers and their proportions shown in Table 3 were used in place of Example 1.

Comparison Examples 3—5

Copolymers were prepared by a procedure similar to that of Example 1, but the monomers and their proportions shown in Table 4 were used in place of those of Example 1.

Examples 1—21 and Comparison Examples 1—5
(Oxygen permeability and Vickers hardness number)

From each of the bar-shaped copolymers obtained in Examples 1—21 and Comparison Examples 1—5, test pieces 13 mm in diameter and 0.2 mm thick were prepared by cutting and polishing.

The oxygen permeability at 35°C of each of the aforementioned test pieces was measured. The results of these tests are summarized in Table 1 (Examples 1—7 and Comparison Examples 1—2), Table 2 (Examples 8—10), Table 3 (Examples 11—21) and Table 4 (Comparison Examples 3—5).

In addition, from each of the aforementioned bar-shaped copolymers a disc 13 mm in diameter and 3 mm thick was prepared by cutting and its Vickers hardness value was measured at 20°C. The test results are summarized in Table 1 (Examples 1—7 and Comparison Examples 1—2), Table 2 (Examples 3—10), Table 3 (Examples 11—21) and Table 4 (Comparison Examples 3—5).

Example 22 and Comparison Examples 6—9
(Contamination resistance)

Test pieces 13 mm in diameter and 1 mm thick, were prepared from the following: (a) polymethyl methacrylate (Comp. Ex. 6; trade name: PARAGLAS®, manufactured by Kyowa Gas Chemical Industries, Ltd.), (b) siloxanylalkyl methacrylate copolymers (Comp. Ex. 7), produced by copolymerizing 50 parts by weight of SiMA {tris(trimethylsiloxy)silylpropyl methacrylate} and 50 parts by weight of MMA according to Example 1; (c) 2-hydroxyethyl methacrylate copolymer (Comp. Ex. 8; manufactured by Hydron Europe Inc.) and (d) copolymer of Comparison Example 4 (Comp. Ex. 9). The test pieces were immersed into a physiological saline solution containing 0.1% by weight of lysozyme at room temperature for 30 days and then removed from the solution and air-dried. Their contamination resistance was examined (respective Comparison Examples 6, 7, 8 and 9) by measuring the transmittance of visible light (wavelength 400 nm) of said test pieces before and after their immersion (by a double-beam Hitachi spectrophotometer, type 228A). The results are summarized in Table 5. Stability in transmittance rate is an indication of low susceptibility to contamination.

Examples 23—26 and Comparison Examples 10—12
(Wettability)

Test pieces 13 mm in diameter and 3 mm thick listed in Table 6 were immersed into 0.9% by weight of a physiological saline solution at 20°C for 24 hrs. Thereafter, their contact angles to air bubbles in the physiological saline solution were measured. The results are summarized in Table 6. Smaller contact angles indicate better wettability.

Contact lenses were manufactured from the copolymers prepared according to the above Examples. All of them could be easily machined and polished.

These lenses underwent a wearing test for 3 months, 10—14 hours every day. They were comfortable to wear and did not cause damage to the cornea nor were they susceptible to contamination.

TABLE 1

| | Monomer (parts) | | | | Oxygen permeability ($\times 10^{-11}$ cc·cm/cm$^2$·sec·mmHg) | Vickers hardness number |
|---|---|---|---|---|---|---|
| | 19FM—OH | MMA | TPTMA | EGDMA | | |
| Example 1 | 70 | 23 | 7 | — | 11.2 | 13.3 |
| 2 | 88 | 5 | 7 | — | 23.2 | 9.1 |
| 3 | 80 | 13 | 7 | — | 14.9 | 11.3 |
| 4 | 70 | 20 | — | 10 | 13.4 | 14.0 |
| 5 | 60 | 33 | 7 | — | 8.5 | 15.4 |
| 6 | 50 | 40 | — | 10 | 5.1 | 17.9 |
| 7 | 38 | 57 | — | 5 | 2.4 | 17.1 |
| Comparison Example 1 | 92 | 3 | 5 | — | 26.5 | 7.6 |
| 2 | 30 | 65 | — | 5 | 1.2 | 18.3 |

In this table, MMA, TPTMA and EGDMA respectively represent methyl methacrylate, trimethylolpropane trimethacrylate and ethyleneglycol dimethacrylate.

TABLE 2

| Example | Monomer (parts) | | | Oxygen permeability ($\times 10^{-11}$cc·cm/cm$^2$·sec·mmHg) | Vickers hardness number |
|---|---|---|---|---|---|
| | Monomer (parts) | MMA | TPTMA | | |
| 8 | 19FA—OH 70 | 23 | 7 | 10.8 | 10.3 |
| 9 | 17FM—OH 70 | 23 | 7 | 9.2 | 11.4 |
| 10 | 12FMO—OH 70 | 23 | 7 | 8.0 | 12.7 |

In this table 19FA—OH, 17FM—OH and 12FMO—OH respectively stand for

$CH_2=CHCOOCH_2CH(OH)CH_2(CF_2)_6CF(F_3)_2$, $CH_2=C(CH_3)COOCH_2CH(OH)CH_2(CF_2)_7CH_3$ and

$CH_2=C(CH_3)COOCH_2CH(OH)CH_2OCH_2(CF_2)_5CHF_2$.

TABLE 3

| Example | Monomer (parts) | | | | | | | | | | | Oxygen permeability ($\times 10^{-11}$cc·cm/cm$^2$·sec·mmHg) | Vickers hardness number |
|---|---|---|---|---|---|---|---|---|---|---|---|---|---|
| | 19FM—OH | iso-PrMA | n-BuMA | iso-BuMA | t-BuMA | cy-HexMA | St | VAc | 3FM | TPTMA | EGDMA | | |
| 11 | 70 | 23 | — | — | — | — | — | — | — | 7 | — | 18.1 | 11.3 |
| 12 | 70 | — | 20 | — | — | — | — | — | — | 10 | — | 17.5 | 9.1 |
| 13 | 70 | — | — | 23 | — | — | — | — | — | 7 | — | 18.0 | 10.2 |
| 14 | 70 | — | — | — | 23 | — | — | — | — | 7 | — | 17.8 | 10.7 |
| 15 | 70 | — | — | — | — | 23 | — | — | — | 7 | — | 13.4 | 11.4 |
| 16 | 70 | — | — | — | — | — | 23 | — | — | 7 | — | 9.6 | 17.2 |
| 17 | 60 | — | — | — | 10 | — | — | 20 | — | 10 | — | 17.0 | 9.0 |
| 18 | 70 | — | — | — | — | — | — | — | 23 | 7 | — | 16.7 | 13.6 |
| 19 | 50 | 45 | — | — | — | — | — | — | — | — | 5 | 12.1 | 12.7 |
| 20 | 50 | — | — | 40 | — | — | — | — | — | — | 10 | 12.5 | 9.7 |
| 21 | 50 | — | — | — | 45 | — | — | — | — | — | 5 | 12.2 | 13.3 |

iso-PrMA: Isopropyl methacrylate
iso-BuMA: Isobutyl methacrylate
cy-HexMA: Cyclohexyl methacrylate
VAc: Vinyl acetate
n-BuMA: n-Butyl methacrylate
t-BuMA: t-Butyl methacrylate
St: Styrene
3FM: 2,2,2-trifluoroethyl methacrylate

TABLE 4

| Comparison Example | Monomer (parts) | | | | Oxygen permeability ($\times 10^{-11}$cc·cm/cm$^2$·sec·mmHg) | Vickers hardness number |
|---|---|---|---|---|---|---|
| | 19FM—OH | SiMA | MMA | EGDMA | | |
| 3 | 24 | 56 | 12 | 8 | 27.5 | 3.2 |
| 4 | 30 | 40 | 22 | 8 | 26.1 | 8.1 |
| 5 | 56 | 24 | 12 | 8 | 26.8 | 7.5 |

In this table, SiMA represents tris(trimethyl siloxy)silylpropyl methacrylate. Others are the same as the aforementioned.

TABLE 5

| Example and Comparison Example | Type of contact lens material | Transmittance (T%) | | Decrease of Transmittance (%) |
|---|---|---|---|---|
| | | Before dipping | After dipping | |
| Example 22 | Copolymer of Example 1 | 94.5 | 89.5 | 5.3 |
| Comparison Example 6 | Polymethyl methacrylate | 98.2 | 88.9 | 9.5 |
| 7 | Siloxyanylalkyl methacrylate copolymers | 94.0 | 83.2 | 11.5 |
| 8 | 2-Hydroxyethyl methacrylate copolymer | 95.0 | 60.0 | 36.8 |
| 9 | Copolymer of Comparison Example 4 | 95.2 | 86.5 | 9.1 |

TABLE 6

| Example or Comparison Example | Monomer (parts) | | | | | Contact angle (degree) |
|---|---|---|---|---|---|---|
| | 19FM—OH | MMA | HEMA | TPTMA | EGDMA | |
| Example 23 | The same as Example 1 | | | | | 52 |
| 24 | The same as Example 4 | | | | | 47 |
| 25 | 70 | 13 | 10 | 7 | — | 35 |
| 26 | 70 | 18 | 5 | 7 | — | 38 |
| Comparison Example 10 | — | 100 | — | — | — | 60 |
| 11 | 70(17FM) | 23 | — | 7 | — | 68 |
| 12 | The same as Comparison Example 4 | | | | | 62 |

17FM: represents 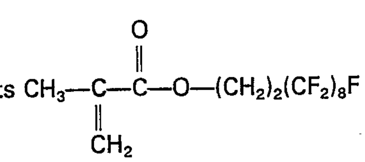

HEMA: 2-hydroxyethyl methacrylate

**Claim**

Contact lenses made of copolymers which are substantially composed of 40—95 parts by weight of a structural unit represented by formula (1):

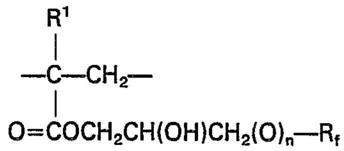

(1)

(where $R^1$ stands for a hydrogen atom or a methyl group; $R_f$ is a polyfluoroalkyl group having 1—15 carbon atoms; and n is either 0 or 1) and 60—5 parts by weight of at least one member selected from a group of structural units represented by formulae 2, 3 and 4

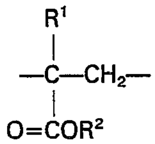

(2)

(where $R^1$ has the above meaning and $R^2$ is an alkyl group having 1—20 carbon atoms or a polyfluoroalkyl group having 1—15 carbon atoms),

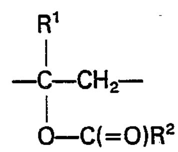

(3)

(where $R^1$ and $R^2$ have the above meaning),

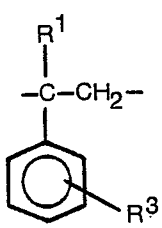

(4)

(where $R^1$ has the above meaning and $R^3$ is a hydrogen atom, an alkyl group having 1—5 carbon atoms or a halogen atom).

**Patentanspruch**

Kontaktlinsen aus Copolymeren, die im wesentlichen zusammengesetzt sind aus 40 bis 90 Gew.-Teilen einer Struktureinheit der Formel (1)

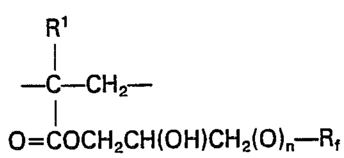

(1)

(in der $R^1$ ein Wasserstoffatom oder eine Methylgruppe bedeutet; $R_f$ einen Polyfluoralkylrest mit 1 bis 15 Kohlenstoffatomen darstellt; und n entweder 0 oder 1 ist) und 60 bis 5 Gew.-Teilen mindestens eines Mitglieds aus einer Gruppe von Struktureinheiten, die durch die Formeln (2), (3) und (4) dargestellt werden:

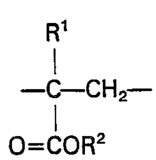

(2)

(in der $R^1$ die vorstehend angegebene Bedeutung hat und $R^2$ einen Alkylrest mit 1 bis 20 Kohlenstoffatomen oder einen Polyfluoralkylrest mit 1 bis 15 Kohlenstoffatomen darstellt)

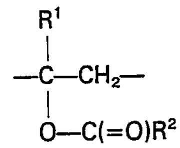

(3)

(in der $R^1$ und $R^2$ die vorstehend angegebenen Bedeutungen haben),

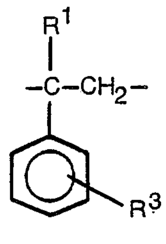

(4)

(in der $R^1$ die vorstehend angegebene Bedeutung hat und $R^3$ ein Wasserstoffatom, einen Alkylrest mit 1 bis 5 Kohlenstoffatomen oder ein Halogenatom bedeutet).

**Revendication**

Lentilles de contact faites de copolymères, qui sont essentiellement composés de 40 à 95 parties en poids d'un motif structural représenté par la formule (1)

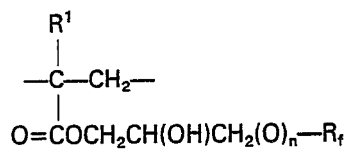

(1)

(dans laquelle $R^1$ représente un atome d'hydrogène ou un groupe méthyle; $R_f$ est un groupe perfluoroalcoyle ayant 1 à 15 atomes de carbone; et n est soit 0, soit 1) et de 60 à 5 parties en poids d'au moins un composant choisi parmi un groupe de motifs structuraux représentés par les formules 2, 3 et 4

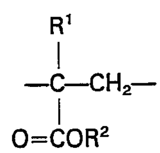

(2)

(dans laquelle $R^1$ a la signification ci-dessus et $R^2$ est un groupe alcoyle ayant 1 à 20 atomes de carbone ou un groupe polyfluoroalcoyle ayant 1 à 15 atomes de carbone),

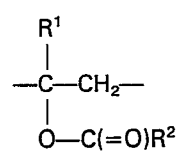

(3)

(dans laquelle $R^1$ et $R^2$ ont la signification ci-dessus),

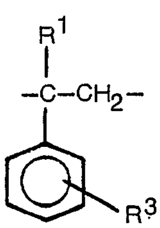

(4)

(dans laquelle $R^1$ a la signification ci-dessus et $R^3$ est un atome d'hydrogène, un groupe alcoyle ayant 1 à 5 atomes de carbone ou un atome d'halogène).